(19) **Europäisches Patentamt European Patent Office Office européen des brevets**

(11) **EP 4 348 167 B1**

(12) **FASCICULE DE BREVET EUROPEEN**

(45) Date de publication et mention de la délivrance du brevet:
**02.07.2025 Bulletin 2025/27**

(21) Numéro de dépôt: **22730221.3**

(22) Date de dépôt: **23.05.2022**

(51) Classification Internationale des Brevets (IPC):
**G01B 9/02055** *(2022.01)* **G01B 9/02091** *(2022.01)*
**G01B 9/02015** *(2022.01)*

(52) Classification Coopérative des Brevets (CPC):
**G01B 9/02079; G01B 9/02024; G01B 9/02091**

(86) Numéro de dépôt international:
**PCT/EP2022/063907**

(87) Numéro de publication internationale:
**WO 2022/248407 (01.12.2022 Gazette 2022/48)**

(54) **PROCEDES ET SYSTEMES D'IMAGERIE TRIDIMENSIONNELLE D'UN OBJET BIOLOGIQUE TRANSPARENT DANS UN ECHANTILLON BIOLOGIQUE PAR TOMOGRAPHIE OPTIQUE PLEIN CHAMP**

VERFAHREN UND SYSTEME ZUR DREIDIMENSIONALEN BILDGEBUNG EINES TRANSPARENTEN BIOLOGISCHEN OBJEKTS IN EINER BIOLOGISCHEN PROBE MITTELS OPTISCHER VOLLFELDTOMOGRAFIE

METHODS AND SYSTEMS FOR THREE-DIMENSIONAL IMAGING OF A TRANSPARENT BIOLOGICAL OBJECT IN A BIOLOGICAL SAMPLE BY FULL-FIELD OPTICAL TOMOGRAPHY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.05.2021 FR 2105600**

(43) Date de publication de la demande:
**10.04.2024 Bulletin 2024/15**

(73) Titulaires:
- **Centre National de la Recherche Scientifique 75016 Paris (FR)**
- **Ecole Supérieure de Physique et de Chimie Industrielles de la Ville de Paris 75005 Paris (FR)**
- **Institut National de la Santé et de la Recherche Médicale 75013 Paris (FR)**
- **Ecole Normale Supérieure de Paris 75230 Paris Cedex 05 (FR)**

(72) Inventeurs:
- **BOCCARA, Albert Claude 75006 Paris (FR)**
- **BOCCARA, Martine 75010 Paris (FR)**
- **THOUVENIN, Olivier 92320 Chatillon (FR)**

(74) Mandataire: **IPAZ Bâtiment Platon Parc Les Algorithmes 91190 Saint-Aubin (FR)**

(56) Documents cités:
**FR-A1- 3 034 858**

- **MARTINE BOCCARA ET AL: "Full-field interferometry for counting and differentiating aquatic biotic nanoparticles: from laboratory to Tara Oceans", BIOMEDICAL OPTICS EXPRESS, vol. 7, no. 9, 29 August 2016 (2016-08-29), United States, pages 3736, XP055641432, ISSN: 2156-7085, DOI: 10.1364/BOE.7.003736**

EP 4 348 167 B1

**Description**

**Domaine technique de l'invention**

La présente description concerne des procédés et systèmes d'imagerie tridimensionnelle d'un objet biologique transparent dans un échantillon biologique par tomographie optique plein champ. Elle est applicable notamment à l'imagerie cellulaire et intracellulaire.

**Etat de la technique**

Les objets biologiques tels que notamment les cellules ou amas de cellules peuvent être étudiés à l'échelle submicronique en utilisant la microscopie optique, mais la plupart des études biologiques utilisent la microscopie à fluorescence qui nécessite de modifier l'échantillon génétiquement ou chimiquement.

Dans les cas où la conservation des échantillons est essentielle, quelques alternatives reposant sur les propriétés optiques intrinsèques des objets biologiques ont été développées. Parmi eux, la microscopie à contraste de phase (voir par exemple Lacey, A [Réf 1]), la microscopie à contraste d'interférence différentielle (voir par exemple Pluta, M [Réf 2]) ou l'holographie numérique (voir par exemple Amos, W. B. *et al.* [Réf 3]) permettent de visualiser des cellules dans des environnements 2D et 3D.

Les techniques d'imagerie par tomographie optique permettent de générer des images en coupe en profondeur d'objets biologiques. On connait notamment parmi ces techniques la tomographie par cohérence optique (ou « OCT » selon l'abréviation anglosaxonne « Optical Coherence Tomography ») basée sur la microscopie à interférence lumineuse à large bande spectrale et la microscopie confocale qui utilise un filtrage géométrique. Les deux techniques nécessitent un balayage bidimensionnel de l'échantillon pour générer une image en face de l'échantillon.

Plus récemment a été développée la technique d'acquisition d'image par microscopie interférentielle plein champ en lumière incohérente, connue sous le nom d'OCT plein champ (ou « FF-OCT » pour « Full-Field OCT »). La technique d'imagerie OCT plein champ est par exemple décrite dans le chapitre « Time Domain Full Field Optical Coherence Tomography Microscopy Time Domain » de Harms, F. *et al.* [Réf. 4] de l'ouvrage « Optical Coherence Tomography" Wolfgang Drexler, ainsi que dans le brevet français FR2817030 [Réf. 5].

La technique d'imagerie OCT plein champ est basée sur l'exploitation de la lumière rétrodiffusée par un échantillon lorsqu'il est éclairé par une source lumineuse à faible longueur de cohérence temporelle, et en particulier l'exploitation de la lumière rétrodiffusée par les structures microscopiques cellulaires et tissulaires dans le cas d'un échantillon biologique. Cette technique exploite la faible cohérence temporelle et spatiale d'une source lumineuse pour isoler la lumière rétrodiffusée par une tranche virtuelle en profondeur dans l'échantillon. L'emploi d'un interféromètre permet de générer, par un phénomène d'interférence, un signal d'interférence représentatif de la lumière provenant sélectivement d'une tranche donnée de l'échantillon, et d'éliminer la lumière provenant du reste de l'échantillon.

La technique d'imagerie OCT plein champ permet d'obtenir des images en trois dimensions avec une résolution typique de l'ordre de $1\mu m$, ce qui est supérieur aux résolutions de l'ordre de $10\mu m$ susceptibles d'être obtenues avec d'autres techniques OCT conventionnelles telles que l'OCT dans le domaine spectral (connue sous l'acronyme « Fourier-Domain OCT » ou « spectral domain OCT »). Avec une telle résolution, on peut visualiser notamment la majorité des structures tissulaires de vaisseaux sanguins, de leurs parois, le collagène, les adipocytes, etc. De plus cette technique se montre particulièrement rapide : il est ainsi possible de générer à l'aide d'un microscope à OCT plein champ une image représentative d'une tranche en profondeur dont la surface est de plusieurs $cm^2$ en quelques minutes seulement.

En plus d'obtenir une carte structurelle d'un échantillon biologique, un autre défi pour l'imagerie optique endogène consiste à extraire des informations spécifiques pour déduire des propriétés biochimiques au niveau cellulaire.

Le brevet français FR 3034858 [Réf. 6] décrit un procédé d'imagerie par microscopie interférentielle plein champ nommé DC-FFOCT (pour « Dynamic Contrast FFOCT ») permettant d'accéder à des informations non perceptibles au moyen des images obtenues selon les techniques d'OCT plein champ classiques, comme par exemple les structures internes de cellules (membrane, noyau, cytoplasme notamment). Ce procédé d'imagerie est basé sur l'analyse des variations temporelles d'intensité entre des signaux interférométriques induites par les variations de différence de marche associées aux mouvements par exemples des vésicules, des mitochondries, organites cellulaires. Une telle analyse dynamique permet d'obtenir des images tomographiques plein champ dans un tissu frais, dans lequel les cellules sont toujours vivantes, avec un excellent contraste et ainsi de visualiser des structures d'objets biologiques jusqu'ici non perceptibles en OCT car les cellules rétrodiffusent très peu de lumière par rapport aux structures du tissu comme le collagène.

Cependant, les techniques FF-OCT et DC-FFOCT décrites ci-dessus travaillent en réflexion et ne sont pas adaptées à des objets biologiques hautement transparents déposés sur un substrat transparent comme par exemple une boîte de Pétri à fond transparent en verre ou en plastique ou une lame de verre. En effet, le signal réfléchi par le substrat est typiquement trois à cinq ordres de grandeur supérieur aux signaux rétrodiffusés par des objets biologiques, par exemple

2

des cellules, ce qui rend difficile l'élimination de ce signal.

Boccar et al.,Full-field interferometry for counting and differentiating aquatic biotic nanoparticles: from laboratory to Tara Oceans, Biomed Opt Express, 2016 Aug 29;7(9):3736-3746 décrit un procédé d'imagerie tridimensionnelle et permet une imagerie tomographique grâce à un arrangement optique original dans lequel l'échantillon est éclairé en transmission.

La présente description concerne un nouveau procédé d'imagerie tridimensionnelle d'un échantillon biologique par tomographie optique plein champ, adapté à l'imagerie tridimensionnelles d'objets biologiques transparents comme les cultures cellulaires ou les structures minces hautement transparentes, avec un excellent contraste et une grande facilité de mise en œuvre.

## Résumé de l'invention

Dans la présente description, le terme « comprendre » signifie la même chose que « inclure », « contenir », et est inclusif ou ouvert et n'exclut pas d'autres éléments non décrits ou représentés. En outre, dans la présente description, le terme « environ » ou « sensiblement » est synonyme de (signifie la même chose que) une marge inférieure et/ou supérieure de 20%, par exemple 10%, de la valeur respective.

La présente description concerne, selon un premier aspect, un procédé d'imagerie tridimensionnelle par tomographie optique plein champ d'un objet biologique transparent dans un échantillon biologique, le procédé d'imagerie tridimensionnelle comprenant :

- le positionnement de l'échantillon au voisinage d'un plan focal objet d'un objectif de microscope, ledit objectif de microscope comprenant un axe optique donné ;
- l'illumination de l'échantillon en transmission au moyen d'un faisceau d'illumination de lumière incohérente spatialement et de longueur d'onde centrale donnée;
- le déplacement relatif dudit objectif de microscope par rapport audit échantillon, selon une direction axiale parallèle à l'axe optique de l'objectif de microscope, pour définir une pluralité de positions de l'échantillon par rapport au plan focal objet de l'objectif de microscope, chaque position correspondant à une section dudit objet biologique transparent centrée sur le plan focal objet de l'objectif de microscope; et
- pour chaque position de l'échantillon, la production d'au moins une première image d'un champ objet de ladite section comprenant :

  - l'acquisition, au moyen d'un dispositif d'acquisition bidimensionnel comprenant une pluralité de détecteurs élémentaires agencés dans un plan de détection, d'une pluralité de signaux interférométriques bidimensionnels résultant d'interférences optiques entre le faisceau d'illumination incident sur ledit champ objet et un faisceau diffusé par ledit champ objet, dans lequel ledit plan de détection est conjugué optiquement avec le plan focal objet de l'objectif de microscope par un système optique d'imagerie comprenant ledit objectif de microscope;
  - le calcul, au moyen d'une unité de traitement, de ladite au moins une première image, à partir de ladite pluralité de signaux interférométriques bidimensionnels.

Par objet biologique transparent, on comprend dans la présente description tout objet biologique faiblement diffusant (typiquement moins d'environ 5% de la lumière incidente diffusée par l'objet), susceptible d'être traversé par la lumière du faisceau d'illumination, par exemple : une cellule ou une pluralité de cellules, par exemple un amas de cellules, un échafaudage cellulaire (ou « *scaffold* »), un tapis cellulaire, ou un biofilm, une tranche mince de tissu telle que celle préparée en anatomopathologie, etc. Typiquement, les objets biologiques transparents dont on cherche à former des images (au moins partielles) grâce au procédé selon la présente description ont des dimensions microscopiques (entre environ 1 $\mu$m et environ 2 mm). Lorsqu'il s'agit plus précisément d'une cellule ou pluralité de cellule, de tels objets biologiques transparents ont des dimensions comprises entre environ 2 microns et environ 50 microns.

Selon la présente description, l'objet biologique transparent fait partie d'un échantillon biologique, c'est à dire un substrat dans lequel se trouve ledit objet biologique transparent. L'échantillon biologique est par exemple et de façon non limitative une culture de cellules 2D ou 3D dans un polymère transparent, ou le produit d'une biopsie à l'aiguille fine (BAF) ou « cytoponction », c'est-à-dire le produit d'un prélèvement de cellules et de tissu à l'aide d'une aiguille fine et d'une seringue.

Dans le procédé d'imagerie tridimensionnelle objet de la présente description, on utilise la variation de phase du faisceau diffusé au voisinage du plan focal objet de l'objectif de microscope, dite phase de Gouy, pour introduire des déphasages entre les signaux interférométriques bidimensionnels de la pluralité de signaux interférométriques bidimensionnels acquis pour former ladite au moins une première image. Au-delà d'une certaine distance du plan focal objet de l'objectif de microscope, on peut montrer qu'il n'y a plus de déphasage entre les signaux interférométriques. Il est donc possible, par déplacement du plan focal objet de l'objectif de microscope dans une tranche d'épaisseur donnée de l'objet biologique à imager, ou grâce au mouvement intrinsèque de structures internes de l'objet biologique dans cette même tranche d'épaisseur donnée, d'acquérir des signaux interférométriques bidimensionnels avec des déphasages différents, à partir desquels une image pourra être calculée.

L'image de l'objet biologique formée grâce au procédé d'imagerie selon la présente description est donc l'image d'un champ objet d'une tranche d'épaisseur donnée appelée « section » ou « section optique » dans la présente description, d'où le terme de tomographie optique. Les déposants ont montré que l'épaisseur de cette tranche est de l'ordre de la profondeur de champ de l'objectif de microscope et dépend donc de l'ouverture numérique de l'objectif de microscope et de la longueur d'onde centrale du faisceau d'illumination. Dans le procédé selon la présente description, le champ objet de la section de l'objet biologique dont on forme une image peut ainsi être défini par un volume dudit objet biologique constitué d'un ensemble de volumes élémentaires ou « voxels », chaque voxel pouvant être assimilé à un volume cylindrique de longueur égale à la profondeur de champ de l'objectif de microscope et de section définie par la tâche de diffraction de l'objectif de microscope. Les dimensions latérales du champ objet (dans un plan perpendiculaire à l'axe optique de l'objectif de microscope) sont égales aux dimensions latérales d'un champ image défini par une surface de détection effective du plan de détection, divisées par une valeur de grandissement du système optique d'imagerie comprenant ledit objectif de microscope. Dans des exemples de réalisation, la surface de détection effective comprend l'ensemble de la surface de détection sur laquelle sont agencés les détecteurs élémentaires ou « pixels » du dispositif d'acquisition bidimensionnel. Dans d'autres exemples de réalisation, la surface de détection effective peut être limitée à une région de ladite surface de détection, par exemple au moyen d'un diaphragme de champ. En pratique, un voxel, ou volume élémentaire du champ objet de la section dans l'espace objet de l'objectif de microscope, pourra correspondre dans l'espace image (plan de détection) à une pluralité de détecteurs élémentaires du dispositif d'acquisition bidimensionnel, autrement appelés « pixels » dans la présente description, afin de respecter les critères d'échantillonnage.

Selon un ou plusieurs exemples de réalisation, en travaillant avec des longueurs d'onde centrales du faisceau d'illumination dans le visible (400 nm - 700 nm), l'épaisseur d'une section d'un objet dont on forme une image au moyen du procédé selon la présente description, est comprise entre environ 200 nm et environ 10 microns pour des ouvertures numériques de l'objectif microscope comprises entre 1,25 et 0,3. En pratique, pour une ouverture numérique donnée de l'objectif de microscope, on pourra travailler avec des longueurs d'onde plus courte pour imager des sections plus fines de l'objet. La résolution de l'image d'un champ objet d'une section est définie par une dimension latérale maximale d'un voxel. Dans le visible et pour des ouvertures numériques de l'objectif microscope comprises entre 1,25 et 0,3, la résolution est comprise entre environ 0.25 microns et environ 1 micron. Le déplacement relatif de l'objectif de microscope par rapport audit échantillon, selon une direction axiale parallèle à l'axe optique de l'objectif de microscope, permet ensuite de produire des images d'une pluralité de sections de l'objet biologique transparent pour produire une image tridimensionnelle dudit objet.

Le procédé d'imagerie tridimensionnelle ainsi décrit permet une imagerie tomographique, y compris d'objets biologiques transparents, grâce à un arrangement optique original dans lequel l'échantillon est éclairé en transmission.

Selon un ou plusieurs exemples de réalisation, ladite pluralité de signaux interférométriques bidimensionnels sont acquis pour différentes positions du plan focal objet dans l'épaisseur de ladite section, résultant en une pluralité de déphasages prédéterminés entre ledit faisceau d'illumination et ledit faisceau diffusé comprises entre - $\pi$/2 et $\pi$/2.

Dans le premier mode de réalisation décrit ci-dessus, le procédé comprend donc pour la production d'une image d'un champ objet d'une section de l'objet biologique, le déplacement relatif dudit objectif de microscope par rapport à l'échantillon, selon une direction axiale parallèle à l'axe optique de l'objectif de microscope, les signaux interférométriques bidimensionnels utilisés pour calculer l'image du champ objet de la section étant acquis pour différentes positions du plan focal objet de l'objectif de microscope au sein de ladite section, permettant ainsi l'acquisition des signaux interférométriques bidimensionnels avec des déphasages prédéterminés.

Selon un ou plusieurs exemples de réalisation, ledit calcul de ladite au moins une première image comprend une combinaison linéaire des signaux interférométriques bidimensionnels de ladite pluralité de signaux interférométriques bidimensionnels d'une pluralité de signaux, par exemple la soustraction de deux desdits signaux interférométriques bidimensionnels.

En pratique, le calcul de ladite au moins une première image comprend, pour chaque détecteur élémentaire du dispositif d'acquisition bidimensionnel, le calcul d'une valeur de pixel fonction d'une combinaison linéaire des intensités desdits signaux interférométriques bidimensionnels acquis par ledit détecteur élémentaire.

Par « valeur de pixel », on comprend dans la présente description la valeur du signal mesuré par le pixel, ou détecteur élémentaire, correspondant.

Selon un ou plusieurs exemples de réalisation, le calcul d'une valeur de pixel est fonction d'une combinaison linéaire des intensités de signaux interférométriques bidimensionnels acquis en faisant varier la distance entre l'objectif de microscope et l'échantillon d'une distance comprise entre environ 1/10 de la profondeur de champ et la profondeur de champ, avantageusement entre environ 1/10 et environ 1/2 de la profondeur de champ.

Selon un ou plusieurs exemples de réalisation, le déplacement relatif dudit objectif de microscope par rapport audit échantillon suit une fonction périodique d'amplitude maximale $\lambda$/4, où $\lambda$ est la longueur d'onde centrale du faisceau d'illumination, par exemple une fonction périodique continue, par exemple une fonction sinusoïdale, ou une rampe périodique. La fonction périodique comprend une période déterminée en fonction d'une cadence d'acquisition du détecteur bidimensionnel pour permettre un échantillonnage temporel adapté au calcul de l'image, par exemple 2, 3 ou 4 acquisitions pour une période. Selon un ou plusieurs exemples de réalisation du procédé d'imagerie tridimensionnelle selon le premier aspect :

- les signaux interférométriques bidimensionnels de ladite pluralité de signaux interférométriques bidimensionnels sont acquis pour une position fixe de l'objectif de microscope par rapport audit échantillon, et le calcul de ladite au moins une première image du champ objet de ladite section comprend :
- le calcul, pour chaque détecteur élémentaire du dispositif d'acquisition bidimensionnel, d'au moins une valeur de pixel en fonction d'une valeur d'un paramètre représentatif des variations temporelles d'intensité desdits signaux interférométriques bidimensionnels acquis par ledit détecteur élémentaire.

Dans ce deuxième mode de réalisation, qui n'est pas couvert par les revendications, une image du champ objet d'une section de l'objet biologique transparent est produite sans déplacement de l'objectif de microscope par rapport à l'échantillon. L'image est différente de celle calculée dans le premier mode de réalisation car elle est caractéristique des mouvements des structures intrinsèques de l'objet biologique et donc de l'environnement. Dans des exemples de réalisations, on pourra produire des images de l'objet biologique à la fois avec le premier mode de réalisation et avec le deuxième mode de réalisation car ces images apportent des informations complémentaires.

Selon un ou plusieurs exemples de réalisation, ledit paramètre est représentatif de la dispersion temporelle des intensités desdits signaux interférométriques.

Selon un ou plusieurs exemples de réalisation, le calcul, pour chaque détecteur élémentaire du dispositif d'acquisition bidimensionnel, d'au moins une valeur de pixel, comprend le calcul d'une transformée de Fourier desdits signaux interférométriques acquis par ledit détecteur élémentaire en fonction du temps.

La présente description concerne, selon un deuxième aspect, un système d'imagerie tridimensionnelle par tomographie optique plein champ d'au moins un objet biologique transparent dans un échantillon biologique, le système d'imagerie comprenant :

- une source lumineuse configurée pour l'émission d'un faisceau d'illumination de lumière incohérente spatialement, de longueur centrale donnée, ledit faisceau d'illumination étant configuré pour illuminer l'échantillon en transmission;
- un système d'imagerie optique comprenant un objectif de microscope avec un axe optique donné et un plan focal objet donné au voisinage duquel, en fonctionnement, l'échantillon est positionné;
- des moyens de déplacement relatif dudit objectif de microscope par rapport audit échantillon, selon une direction axiale parallèle à l'axe optique de l'objectif de microscope ;
- un dispositif d'acquisition bidimensionnelle comprenant un plan de détection, ledit plan de détection étant conjugué optiquement avec le plan focal objet de l'objectif de microscope par ledit système optique d'imagerie; et
- une unité de traitement; dans lequel, pour chaque section d'une pluralité de sections dudit objet biologique :

  - ledit système d'imagerie tridimensionnelle est configuré pour l'acquisition, au moyen dudit dispositif d'acquisition bidimensionnelle, d'une pluralité de signaux interférométriques bidimensionnels résultant d'interférences optiques entre ledit faisceau d'illumination et un faisceau diffusé par ladite section;
  - ladite unité de traitement est configurée pour calculer à partir de ladite pluralité de signaux interférométriques bidimensionnels au moins une première image d'un champ objet de ladite section.

Un tel agencement original du système d'imagerie permet une imagerie par tomographie optique d'un objet biologique transparent, des images de sections ou « tranches » de l'objet biologique pouvant être produites afin de produire une image tridimensionnelle.

Selon un ou plusieurs exemples de réalisation, les signaux interférométriques bidimensionnels de ladite pluralité de signaux interférométriques bidimensionnels sont acquis pour différentes positions du plan focal objet dans l'épaisseur de ladite section, résultant en une pluralité de déphasages prédéterminés entre ledit faisceau d'illumination et ledit faisceau diffusé comprises entre - $\pi/2$ et $\pi/2$.

Dans ce premier mode de réalisation du système d'imagerie selon la présente description, les moyens de déplacement relatif dudit objectif de microscope par rapport audit échantillon sont configurés pour non seulement déplacer le plan focal objet de l'objectif de microscope au sein d'une section de l'objet biologique afin de produire une image de ladite section, mais également déplacer le plan focal objet le long de l'axe optique dans l'échantillon pour produire des images d'une pluralité de sections dudit objet biologique afin de produire une image tridimensionnelle.

Selon un ou plusieurs exemples de réalisation, le calcul de ladite au moins une première image comprend une combinaison linéaire des signaux interférométriques bidimensionnels de ladite pluralité de signaux interférométriques bidimensionnels.

Selon un ou plusieurs exemples de réalisation, les signaux interférométriques bidimensionnels ladite pluralité de signaux interférométriques bidimensionnels sont acquis pour une position fixe de l'objectif de microscope par rapport audit échantillon, et le calcul de ladite au moins une première image de ladite section comprend :

- le calcul, pour chaque détecteur élémentaire du dispositif d'acquisition bidimensionnel, d'au moins une valeur de pixel en fonction d'une valeur d'un paramètre représentatif des variations temporelles d'intensité desdits signaux interférométriques bidimensionnels acquis par ledit détecteur élémentaire.

Dans ce deuxième mode de réalisation du système d'imagerie qui n'est pas couvert par les revendications, les moyens de déplacement relatif dudit objectif de microscope par rapport audit échantillon peuvent n'être configurés que pour déplacer le plan focal objet le long de l'axe optique dans l'objet biologique à imager pour produire des images d'une pluralité de sections dudit objet biologique afin de produire une image tridimensionnelle.

Le premier et le deuxième mode de réalisation peuvent être mis en œuvre dans un même système d'imagerie selon la présente description afin d'obtenir une pluralité de premières images et une pluralité de deuxièmes images de sections de l'objet biologique transparent que l'on cherche à imager.

### Brève description des figures

D'autres avantages et caractéristiques de la technique d'imagerie présentée ci-dessus apparaîtront à la lecture de la description détaillée ci-dessous, faite par référence aux figures dans lesquelles :

[FIG. 1A] représente un schéma d'un exemple de système d'imagerie tridimensionnelle selon la présente description.

[FIG. 1B] représente plus précisément et de façon schématique un plan focal objet de l'objectif de microscope dans un exemple de système d'imagerie tridimensionnelle selon la présente description.

[FIG. 2A] illustre de façon schématique, dans un exemple de mise en œuvre d'un procédé d'imagerie tridimensionnelle selon un premier mode de réalisation, deux positions du plan focal objet de l'objectif de microscope au sein d'une section d'un objet biologique transparent pour faire une image d'un champ objet de ladite section.

[FIG. 2B] illustre de façon schématique, dans un exemple de mise en œuvre d'un procédé d'imagerie tridimensionnelle selon le premier mode de réalisation, une pluralité de positions du plan focal objet de l'objectif de microscope, le plan focal objet étant centré sur différentes sections d'un objet biologique transparent pour faire une image tridimensionnelle dudit objet.

[FIG. 3A] montre, à titre d'illustration, l'intensité théorique calculée au centre du champ image pour un signal interférométrique bidimensionnel résultant de l'interférence d'un faisceau d'illumination et d'un faisceau diffusé par une particule diffusante comme le serait par exemple un organite cellulaire de dimension nanométrique, en fonction de la position relative du plan focal objet de l'objectif de microscope par rapport à la position de ladite particule.

[FIG. 3B] montre, à titre d'illustration, l'intensité théorique calculée et représentée sur la FIG. 3A, à laquelle on a retranché un fond continu correspondant à une valeur moyenne du signal interférométrique en z.

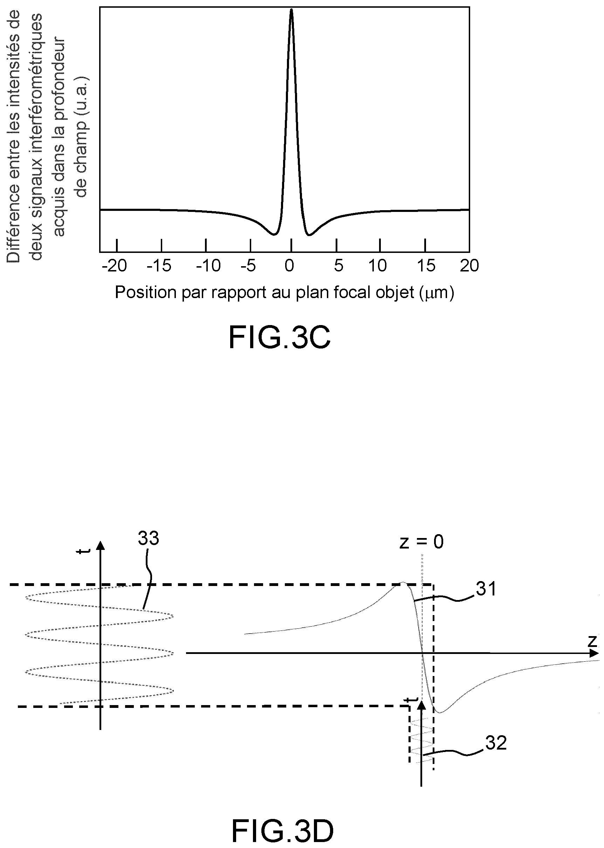

[FIG. 3C] montre, à titre d'illustration, dans un exemple de de mise en œuvre d'un procédé d'imagerie tridimensionnelle selon le premier mode de réalisation, la différence entre des intensités théoriques calculées au centre du champ respectivement pour deux signaux interférométriques bidimensionnels résultant de l'interférence d'un faisceau d'illumination et d'un faisceau diffusé par la particule, pour deux positions de la particule séparées d'une distance égale à un dixième de la profondeur de champ donnée, en fonction de la position relative du plan focal objet de l'objectif de microscope par rapport à la position de ladite particule.

[FIG. 3D] montre, à titre d'illustration, l'intensité théorique calculée et représentée sur la FIG. 3B, à laquelle superpose une courbe illustrant un déplacement relatif du plan focal objet de l'objectif de microscope par rapport à l'échantillon selon une fonction sinusoïdale.

[FIG. 4] illustre, de façon schématique, dans la mise en œuvre d'un procédé d'imagerie tridimensionnelle selon un deuxième mode de réalisation, la position du plan focal objet de l'objectif de microscope par rapport à une section d'un objet biologique pour faire une image d'un champ objet de ladite section.

[FIG. 5] montre, à titre d'illustration, l'intensité théorique calculée et représentée sur la FIG. 3B, à laquelle superpose une courbe illustrant un déplacement aléatoire d'une structure intrinsèque de l'objet biologique par rapport au plan focal objet de l'objectif de microscope.

[FIG. 6] montre des images expérimentales obtenus sur deux cellules HeLa voisines selon deux plans de coupes différents à 4 microns de distance, avec deux modes de réalisation d'un procédé selon la présente description.

**Description détaillée**

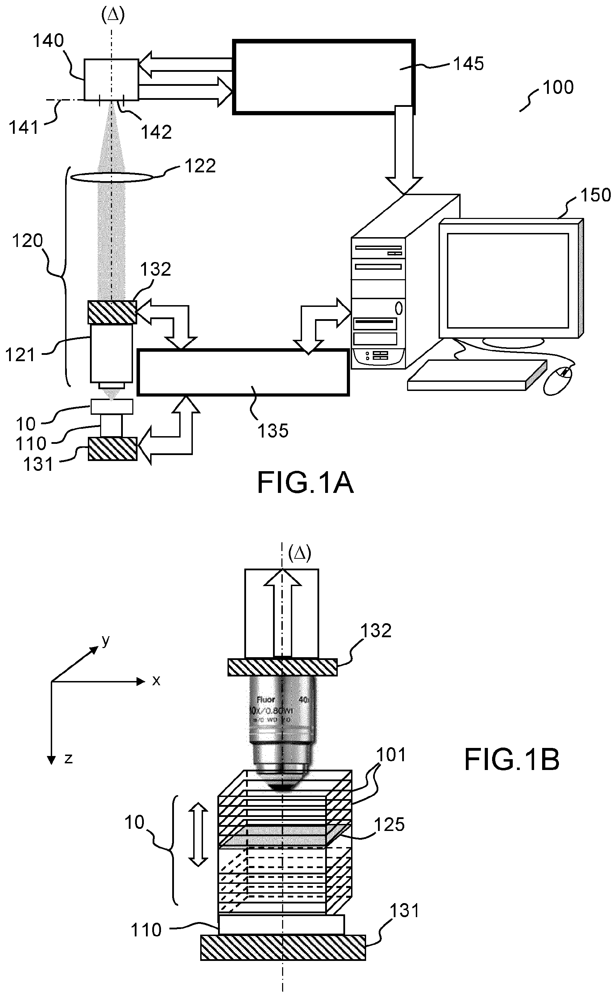

La FIG. 1A et la FIG. 1B illustrent de façon schématique un exemple de réalisation d'un système d'imagerie tridimensionnelle 100 selon la présente description.

Le système d'imagerie 100 comprend une source de lumière 110 configurée pour illuminer l'échantillon 10 en transmission avec un faisceau d'illumination de lumière incohérente spatialement, de longueur centrale λ donnée. Le faisceau d'illumination est avantageusement mais non nécessairement un faisceau de lumière incohérente temporellement pour éviter des effets non voulus de tavelures optiques ou « speckle ».

La source 110 est par exemple une diode électroluminescente (ou LED pour « *Light Emitting Diode* »), une source à filament chauffant, une matrice de sources élémentaires de type VCSEL (pour « *Vertical external Cavity Surface Emitting Laser* »), un laser associé à une membrane ou tout autre moyen permettant de rendre le faisceau d'illumination incohérent spatialement.

Dans les exemples illustrés sur la FIG. 1A et sur la FIG. 1B, la source 110 est positionnée contre l'échantillon 10 pour l'émission du faisceau d'illumination en transmission mais d'autres configurations d'éclairage sont également possibles.

Le système d'imagerie tridimensionnelle 100 comprend par ailleurs un système d'imagerie optique 120 comprenant un objectif de microscope 121 avec un axe optique Δ et un plan focal objet 125 (FIG. 1B) au voisinage duquel, en fonctionnement, l'échantillon 10 est placé. Dans l'exemple de la FIG. 1A, le système d'imagerie optique 120 comprend par ailleurs un objectif 122 (optionnel), généralement appelé « lentille de tube ».

Le système d'imagerie tridimensionnelle 100 comprend également des moyens de déplacement relatif de l'objectif de microscope 121 par rapport à l'échantillon 10, selon une direction axiale parallèle à l'axe optique de l'objectif de microscope. Dans l'exemple des FIG. 1A et FIG. 1B, les moyens de déplacement relatif comprennent un premier élément piézoélectrique 131 configuré pour déplacer axialement l'objectif de microscope 121 et un deuxième élément piézoélectrique 132 configuré pour déplacer axialement un porte-échantillon (non représenté sur les figures) sur lequel est agencé l'échantillon 10. Les moyens de déplacement relatif comprennent également une unité de contrôle 135 pour le contrôle des éléments 131, 132. Dans d'autres exemples de réalisation cependant, les moyens de déplacement relatif peuvent ne comprendre qu'un élément de déplacement, soit de l'objectif de microscope, soit du porte-échantillon.

Le système d'imagerie tridimensionnelle 100 comprend par ailleurs un dispositif d'acquisition bidimensionnelle 140 comprenant un plan de détection 141, le plan de détection 141 étant conjugué optiquement avec le plan focal objet 125 de l'objectif de microscope par le système optique d'imagerie 120 et un module de contrôle 145 du dispositif d'acquisition 140. Le dispositif d'acquisition bidimensionnelle 140 comprend une pluralité de détecteurs élémentaires ou « pixels » agencés au niveau de la surface de détection sous forme d'un arrangement matriciel, par exemple un arrangement matriciel à deux dimensions. Par exemple, les dimensions de l'arrangement matriciel des détecteurs élémentaires définissent les dimensions d'un champ image 142 du système d'imagerie selon la présente description. Dans d'autres exemples de réalisation, des dimensions du champ image 142 sont limitées par un diaphragme de champ de sorte que la surface effective de détection dans le plan de détection ou « R.O.I. » selon l'abréviation de l'expression anglo-saxonne « *Region Of Interest* » est plus petite que la surface couverte par l'arrangement bidimensionnel des détecteurs élémentaires. Le champ image est par exemple rectangulaire avec des dimensions comprises entre environ 5 mm et environ 50 mm.

Par exemple, le dispositif d'acquisition bidimensionnel est une caméra de type CCD ou CMOS. Bien entendu, d'autres caméras peuvent être utilisés, comme par exemple des caméras ultra rapides avec une plus grande capacité de charges par pixel, par exemple une caméra de type QUARTZ series ® de ADIMEC®.

Le module de contrôle 145 permet de contrôle de l'acquisition du dispositif d'acquisition 140 et reçoit les signaux électriques transmis par le dispositif d'acquisition 140 pour les envoyer vers une unité de traitement 150.

Comme illustré sur la FIG. 1A, le système d'imagerie tridimensionnelle 100 comprend l'unité de traitement 150 configurée pour la mise en œuvre d'étapes de calcul et/ou de traitement mises en œuvre dans des procédés selon la présente demande.

De façon générale, lorsque dans la présente description, il est fait référence à des étapes de calcul ou traitement pour la mise en œuvre notamment d'étapes de procédés, il est entendu que chaque étape de calcul ou traitement peut être mis en œuvre par logiciel, hardware, firmware, microcode ou toute combinaison appropriée de ces technologies. Lorsqu'un logiciel est utilisé, chaque étape de calcul ou traitement peut être mise en œuvre par des instructions de programme d'ordinateur ou du code logiciel. Ces instructions peuvent être stockées ou transmises vers un support de stockage lisible par un ordinateur (ou unité de traitement) et/ou être exécutées par un ordinateur (ou unité de traitement) afin de mettre en œuvre ces étapes de calcul ou traitement.

Ainsi, en fonctionnement, comme cela sera décrit plus en détails par la suite, le système d'imagerie tridimensionnelle 100 est configuré pour l'acquisition, au moyen dudit dispositif d'acquisition bidimensionnelle 140, d'une pluralité de signaux interférométriques bidimensionnels résultant d'interférences optiques entre le faisceau d'illumination incident sur l'échantillon 10 et un faisceau diffusé par ladite au moins un objet biologique transparent de l'échantillon 10, par exemple une cellule ou un amas de cellules. Par ailleurs, l'unité de traitement est configurée pour calculer à partir de la pluralité de signaux interférométriques bidimensionnels une ou plusieurs images d'un champ objet de chaque section d'une pluralité de sections 101 de l'objet biologique.

Les dimensions latérales du champ objet sont égales aux dimensions latérales du champ image divisés par un grandissement du système d'imagerie optique 120 comprenant l'objectif de microscope. Ainsi par exemple, pour un champ image sensiblement rectangulaire de dimensions 10 mm par 10 mm, les dimensions du champ objet sont de 100 μm par 100 μm pour un grandissement du système d'imagerie optique 100x et 500 μm par 500 μm pour un grandissement du système d'imagerie optique 20x. De façon générale, les dimensions du champ objet sont comprises entre environ 50 μm et environ 500 μm.

Le champ objet d'une section 101 de l'objet biologique dont on forme une image peut être défini par un volume constitué d'un ensemble de volumes élémentaires ou « voxels », chaque voxel pouvant être assimilé à un volume cylindrique de longueur égale à la profondeur de champ de l'objectif de microscope et de section élémentaire définie par la tâche de diffraction de l'objectif de microscope.

La profondeur de champ L et le diamètre φ de la section élémentaire sont donnés par :

[Math 1]

$$L = 1,22 \frac{\lambda n}{NA^2}$$

[Math 2]

$$\Phi = 1,22 \frac{\lambda}{NA}$$

Où n l'indice du milieu dans lequel baigne l'espace objet (par exemple un milieu d'indice n ≈ 1,5 dans le cas d'un objectif à immersion dans l'huile), NA est l'ouverture numérique de l'objectif de microscope dans ledit milieu, et λ la longueur d'onde centrale du faisceau d'illumination.

Comme cela est schématisé sur la FIG. 1B, chaque section 101 est sensiblement perpendiculaire à l'axe optique Δ de l'objectif de microscope. En fonctionnement, pour produire une image d'une section, on centre le plan focal objet de l'objectif de microscope sur ladite section grâce à un déplacement relatif de l'objectif de microscope et de l'échantillon 10. A partir des images des sections, une image tridimensionnelle de l'objet biologique transparent peut être produite.

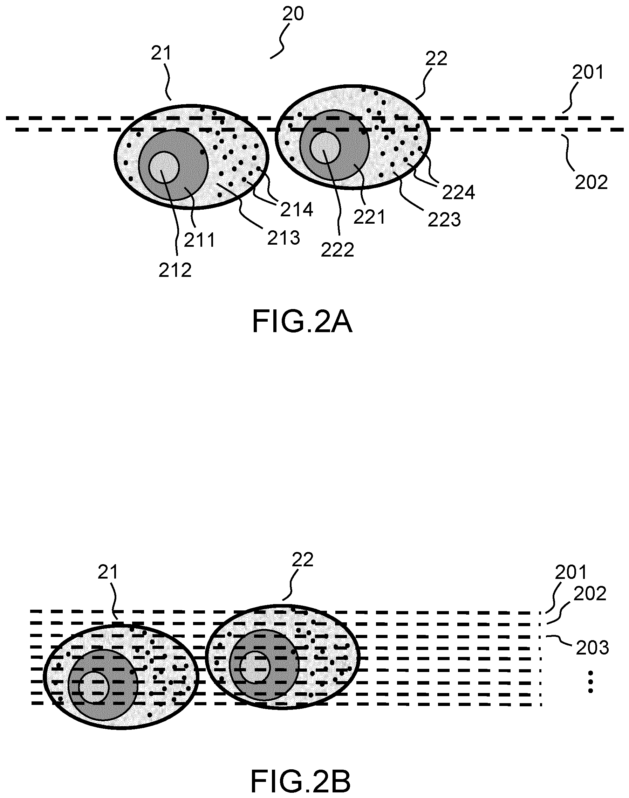

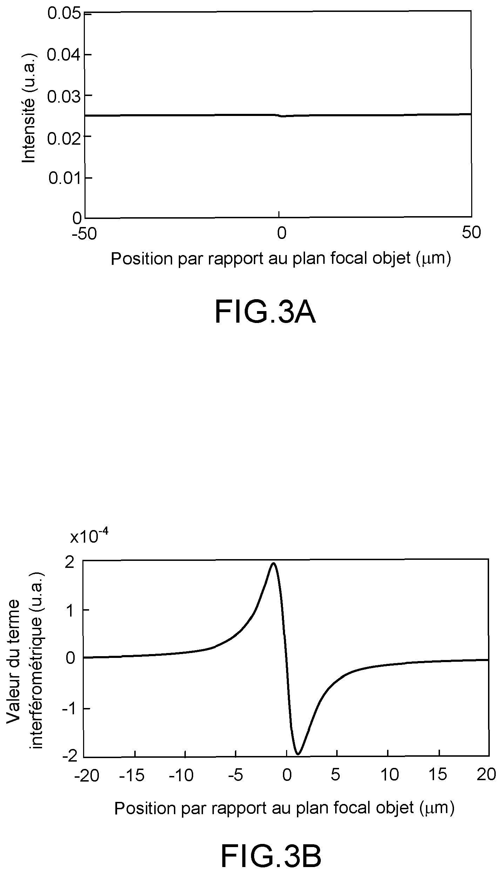

Un premier mode de réalisation d'un procédé d'imagerie tridimensionnelle est décrit au moyen des FIG. 2A, FIG. 2B, FIG. 3A, FIG. 3B, FIG. 3C, FIG.3D. Ce premier mode de réalisation décrit un premier mode d'acquisition et de calcul d'une image d'un champ objet d'une section.

Dans le mode d'acquisition selon le premier mode de réalisation, pour la production d'une image d'un champ objet d'une section d'un objet biologique transparent, par exemple une cellule ou un amas de cellule, le plan focal objet de l'objectif de microscope est déplacé au sein de ladite section, selon une direction axiale parallèle à l'axe optique de l'objectif de microscope.

On acquiert une pluralité de signaux interférométriques bidimensionnels pour différentes positions de plan focal objet au sein de ladite section, résultant en une pluralité de déphasages entre le faisceau incident et le faisceau diffusé par ladite section compris entre -π/2 et π/2. On calcule ensuite directement l'image de l'ensemble du champ objet de la section à partir desdits signaux interférométriques bidimensionnels d'où la notion d'imagerie *plein champ*. A titre d'illustration, la FIG. 2A représente un amas 20 de deux cellules 21, 22 dont on cherche à faire une image tomographique tridimensionnelle. Chaque cellule comprend un noyau 211, 221 avec un nucléole 212, 222 et autour du noyau un cytoplasme 213, 223 au sein duquel se trouvent des organelles cellulaires 214, 224 tels que des mitochondries, des vésicules, des corps lipidiques, des condensats de protéine, etc. Les organelles du cytoplasme ou les structures internes du noyau des cellules diffusent la lumière. Comme cela est décrit ci-dessous, à partir d'au moins deux signaux interférométriques bidimensionnels acquis en faisant varier la distance entre l'objectif de microscope et l'échantillon, typiquement d'une distance comprise entre environ 1/10 de la profondeur de champ et la profondeur de champ, par exemple entre environ 1/10 et environ 1/2 de la profondeur de champ, et donc la phase du signal interférométrique, il est possible de calculer une image de la section dans le volume de la cellule, par exemple par différence pixel par pixel entre les deux signaux interférométriques acquis. Les traits en pointillés 201, 202 illustrent à titre d'exemple deux positions du plan focal objet de l'objectif au sein de la section que l'on cherche à imager. Pour expliquer le principe de calcul d'une image d'une section selon le premier mode de réalisation, on fait l'hypothèse que le champ électromagnétique reçu dans le plan de détection 141 du dispositif d'acquisition 140 (FIG. 1A) est la superposition du champ incident émis par la source et transmis par l'échantillon, modélisé dans cet exemple par une onde plane, et du champ diffusé par la cellule, modélisé au niveau de chaque voxel du champ objet par un faisceau gaussien qui se prête bien à une formulation analytique. Les conclusions développées ci-dessous restent valables dans les cas d'un faisceau d'illumination qui n'est pas rigoureusement une onde plane ou d'un faisceau diffusé qui n'est pas rigoureusement assimilé à un faisceau gaussien.

A noter que du fait de l'incohérence spatiale du faisceau d'illumination, on peut considérer en effet le faisceau diffusé par l'ensemble du champ objet comme une pluralité de faisceaux agencés les uns à côté des autres dans tout le champ de l'objet biologique, la taille de chaque faisceau étant définie par la résolution de l'objectif de microscope.

Plus précisément, le champ électrique complexe d'un faisceau gaussien se propageant selon un axe z parallèle à l'axe optique de l'objectif de microscope (FIG. 1B), dans l'approximation scalaire, s'écrit :

[Math 3]

$$E(r,z) = E_0\,(w_0/w(z))\,\exp(-r^2/\,w(z)^2)\,\exp(-ikz - ik(-r^2/2R(z)) + i\zeta(z))$$

La coordonnée z est définie le long de l'axe optique de l'objectif de microscope par rapport à une origine (z = 0) définie au niveau du plan focal objet de l'objectif de microscope ; r est la distance à l'axe optique, $k = 2\pi/\lambda$ où $\lambda$ est la longueur d'onde centrale du faisceau d'illumination. $E_0$ et $w_0$ sont le champ et la taille du faisceau à l'origine ($z = 0$, $r = 0$). On peut faire l'approximation que la taille $w_0$ du faisceau à l'origine est égale au rayon $\phi/2$ de la tache de diffraction de l'objectif de microscope donné ci-dessus [Math 2]. A noter qu'en pratique, la taille du faisceau définit la dimension du plus petit détail accessible dans l'image. Pour avoir dans les signaux interférométriques acquis par le dispositif de détection un échantillonnage obéissant au théorème d'échantillonnage, appelé également « *théorème de Shannon* », on pourra choisir pour $w_0$ une valeur supérieure ou égale à la dimension maximale d'un pixel.

Dans la suite on va raisonner autour de r = 0 mais en pratique on s'intéresse à un champ objet étendu et on peut montrer que les courbes décrites ci-dessous sont les mêmes en tout point du champ objet en l'absence d'aberrations, ce qui est en pratique le cas avec des objectifs de microscope.

Pour un faisceau gaussien, la largeur du faisceau w(z) est minimale à son origine (z = 0) et est égale, à une distance z le long de l'axe du faisceau, à $w(z) = w_0(1 + (z/z_0)^2)^{0,5}$.

La profondeur de champ est donnée par $2^* z_0 = \pi w_0^2/\lambda$ et le rayon de courbure de l'onde est $R(z) = z(1 + (z/z_0)^2)$.

A partir de l'expression du champ électrique de l'onde, on peut faire apparaître un terme de phase, appelée la phase de Gouy, qui représente le saut de phase qui se produit au foyer et qui est donné par :

[Math 4]

$$\zeta(z) = \operatorname{atan}(z/z_0)$$

Un objet biologique, comme une cellule, est composé de structures internes de dimensions comprises entre environ 10 nanomètres et environ 1 micromètre. Les structures internes sont par exemple des organites cellulaires, filaments et microtubules, vésicules et mitochondries. Pour illustrer la réponse axiale des signaux enregistrés, nous prenons ici l'exemple d'une telle structure interne qui peut être assimilée à une particule ou « diffuseur » ayant une position (z) donnée par rapport au plan focal objet de l'objectif de microscope.

Le champ diffusé par la particule au centre du champ objet s'écrit donc :

[Math 5]

$$E_{scat}(0,z) = E_0 \cdot \frac{\sigma}{A} \cdot \frac{1}{1 + \left(\frac{z}{z_0}\right)^2} \cdot \exp\left(-ikz + i\arctan\left(\frac{z}{z_0}\right) + i\frac{\pi}{2}\right),$$

Avec $\sigma/A$, e rapport entre la section efficace de diffusion de la particule et A, l'aire du faisceau d'illumination incident.

Le champ incident est modélisé par une onde plane :

[Math 6]

$$E_{inc}(0,z) = E_0 \cdot \left(1 - \frac{\sigma}{A}\right) \cdot \exp\left(-ikz\right)$$

Ainsi, l'intensité mesurée par le dispositif d'acquisition et qui correspond au signal interférométrique bidimensionnel au centre du champ devient, en négligeant les termes en exp(iωt) et les termes de propagation communs aux deux faisceaux qui sont moyennés à 0 :

[Math 7]

$$I = <(E_{scat} + E_{inc}).*(E_{scat} + E_{inc})^* >$$

Soit

[Math 8]

$$I = I_0((1 - \frac{\sigma}{A})^2 + (\frac{\sigma}{A}.\frac{1}{1 + (\frac{z}{z_0})^2})^2 + 2(1 - \frac{\sigma}{A}).(\frac{\sigma}{A}.\frac{1}{1 + (\frac{z}{z_0})^2}) \cos(\arctan(\frac{z}{z_0}) + \frac{\pi}{2}))$$

Généralement, pour de petites particules, la section efficace est très petite devant 1, et on peut alors écrire :

[Math 9]

$$I(z) = I_0(1 - 2(\frac{\sigma}{A}).\frac{1}{1 + (\frac{z}{z_0})^2}.\sin(\arctan(\frac{z}{z_0})))$$

La FIG. 3A illustre ainsi la courbe d'intensité I(z) calculée pour $\sigma/A = 0,01$ et $z_0 = 0.25$ μm ($\lambda = 0.5$ μm, NA= 1.25), soit une profondeur de champ de 0,5 μm.

Cette propriété de variation du signal interférométrique mesurée dans le plan de détection en fonction de la position de la particule diffusante est exploitée pour calculer une image d'un champ objet d'une section de l'objet biologique transparent, par exemple une cellule. Comme expliqué précédemment, la position relative de l'objectif de microscope avec l'échantillon est modifiée, par exemple au moyen d'un élément piézoélectrique (132, FIG. 1A). Il est alors possible de faire varier la valeur de z et d'obtenir plusieurs signaux interférométriques différents.

Plus précisément, on exploite la linéarité du terme d'interférence au voisinage de z=0 (FIG. 3B) pour obtenir la section efficace des objets qui se trouvent au foyer de l'objectif de microscope. Dans cet exemple, la FIG. 3B représente une courbe obtenue par la courbe montrée sur la FIG. 3A à laquelle on a retranché un fond moyen.

Au voisinage du foyer, on peut linéariser les fonctions sinus et arctan et enlever le préfacteur en $1/(1+(z/z_0)^2)$ ). L'équation [Math 9] devient :

[Math 10]

$$I(z) \sim I_0(1 - 2(\frac{\sigma}{A}).\frac{z}{z_0})$$

Sur la courbe illustrée sur la FIG. 3B, on observe que la zone de linéarité s'étend sur une zone de l'ordre du micron.

En prenant deux images successives pour des positions z distantes par exemple de 0,1 μm obtenues en bougeant l'objectif (ou l'échantillon), et en mesurant la différence entre les deux signaux interférométriques, on obtient :

[Math 11]

$$\Delta I(z \sim 0) \sim -2.I_0.(\frac{\sigma}{A}).\frac{\Delta z}{z_0}$$

qui est directement proportionnel à σ, la section efficace de diffusion de la particule.

Par ailleurs, si la particule est loin du foyer, l'intensité du terme d'interférence tend vers 0, car le sin(atan(z)) tend vers 0, et le préfacteur $(1/(1+z^2))$ tend aussi vers 0 quand z devient grand.

Du coup, si les particules sont loin du foyer, la différence d'images successives décalées de $\Delta z \sim 1$ μm est $\Delta I(z >> z_0) = 0$.

Ainsi, la différence d'intensité est non nulle que si l'objet est proche du foyer de l'objectif. Le procédé d'imagerie selon la présente description permet donc un « sectionnement optique » c'est-à-dire l'image d'une section de l'échantillon d'épaisseur donné. Autrement dit, si on regarde un objet 3D composé de plusieurs diffuseurs/particules, en faisant cette différence d'image à deux positions, on isole seulement les diffuseurs présents à une profondeur donnée, et on peut obtenir la structure de l'objet 3D (sa composition en diffuseur) à une profondeur donnée.

Le déphasage de $-\pi/2$ et $\pi/2$ se produit sur des distances de l'ordre de la profondeur de champ $z_0$ de l'objectif de microscope. Pour obtenir une coupe fine de l'échantillon on utilisera donc des objectifs de grande ouverture numérique. Par exemple avec des objectifs à immersion dans l'huile d'ouverture numérique de 1.25 la profondeur de champ est de 0.5 $\mu m$ alors que les objectifs à eau d'ouverture numérique est souvent de 0.9 la profondeur de champ est de 1 $\mu m$.

Dans le cas général des courbes ci-dessus, on peut tracer la différence d'intensité entre deux images, pixel par pixel, prises à une distance de l'ordre de la profondeur de champ, par exemple 1/10 de la profondeur de champ, pour différentes positions d'un diffuseur, comme cela est illustré sur la FIG. 3C.

On observe sur la courbe illustrée sur la FIG. 3C que le diffuseur n'est visible que s'il se trouve proche du foyer. On peut définir un critère (e.g. largeur à mi-hauteur) arbitraire pour définir la section optique, c'est-à-dire l'épaisseur sur laquelle un diffuseur est détectable, et on voit ici qu'elle est de l'ordre de la profondeur de champ de l'appareil, soit de l'ordre de 0.5 microns pour un objectif à huile d'ouverture numérique 1.25).

En pratique, on détermine qu'il est intéressant de choisir des signaux interférométriques obtenus pour des différences axiales comprises entre 0,1 et 0,4 microns.

En pratique, si on travaille à haute cadence, les éléments piézoélectriques ne sont pas toujours adaptés pour faire un déplacement instantané en créneau, et on peut préférer faire une modulation sinusoïdale du déplacement. Comme on se place dans une zone où la réponse optique est linéaire pour z~0, la variation du signal optique est sinusoïdale également, ce qu'on sait très bien filtrer par détection synchrone en prenant 4 images par exemple.

Si le diffuseur est en dehors de cette zone linéaire, la détection synchrone ne permet plus de détecter un signal.

A partir d'une image d'une section optique, il est alors possible de scanner l'échantillon dans le volume comme illustré sur la FIG. 2B. On réalise alors de la « tomographie », c'est-à-dire une mesure de l'intensité diffusée par les tranches à différentes correspondant à différentes positions axiales fournissant une image 3D de l'échantillon.

Pour cela, on peut par exemple positionner le plan focal objet à une position référencée 201 sur la FIG. 2B, procéder à une acquisition d'un signal interférométrique dans ce plan ainsi que dans un plan référencé 202 séparé du plan 201 de 0,2 micromètres. On calcule alors la différence entre les signaux interférométrique bidimensionnels pour déterminer une image d'une première section, puis on déplace le plan focal objet et on procède à de nouvelles acquisitions pour déterminer une image d'une section suivante. Par exemple, on peut déplacer le plan focal objet dans un plan référencé 203 et acquérir un signal interférométrique dans ce plan, faire la différence avec le signal interférométrique acquis dans le plan 202 pour calculer une image d'une autre section optique, et ainsi de suite.

On peut également moduler périodiquement la position relative de l'objectif de microscope et de l'échantillon en appliquant une tension sinusoïdale à l'un des deux déplacements piézoélectriques de la FIG. 1. On réalise alors une détection synchrone des signaux en prenant un échantillonnage temporel d'au moins 2 images sur une demi période.

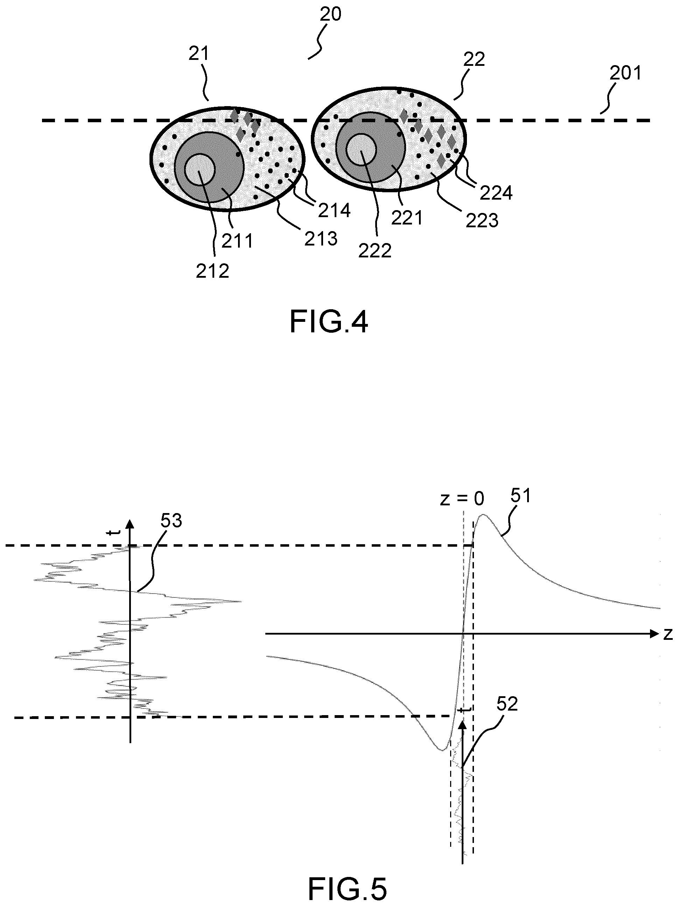

Un deuxième mode de réalisation d'un procédé d'imagerie tridimensionnelle qui n'est pas couvert par les revendications, est décrit au moyen des FIG. 4 et FIG. 5. Ce deuxième mode de réalisation décrit un autre mode d'acquisition et de calcul d'une image d'une section, différent de celui décrit en relation avec les figures précédentes. A noter qu'il est possible de calculer pour chaque section une première image comprenant au premier mode de réalisation et une deuxième image correspondant au deuxième mode de réalisation.

Dans le mode de réalisation précédent, un déplacement relatif de l'objectif de microscope et de l'échantillon est effectué pour mesurer des différences d'intensité à deux positions différentes.

Cependant, les déposants ont constaté que la plupart des organelles des objets biologiques sont animés de mouvements internes qui modulent leurs positions spontanément.

Ainsi, dans le deuxième mode de réalisation de procédés d'imagerie tomographique selon la présente description, l'objectif de microscope n'est pas déplacé relativement à l'échantillon pour le calcul d'une image d'une section optique, comme cela est détaillé ci-dessous. Un déplacement relatif n'est effectué que pour calculer des images de différentes sections optiques et reconstruire ainsi une image tridimensionnelle.

En pratique cependant, on ne connaît pas à priori le déplacement des objets biologiques, ce déplacement étant *a priori* aléatoire, alors que $\Delta I \sim \sigma . \Delta z$ [Math 11], donc on ne peut pas déterminer ni la section efficace du diffuseur, ni son déplacement, et on ne peut pas caractériser un diffuseur unique.

Dans le procédé d'imagerie tomographique selon le deuxième mode de réalisation, on procède au calcul d'une image d'un champ objet d'une section optique à partir de variations temporelles d'intensité entre lesdits signaux interférométriques bidimensionnels acquis pour une position donnée du plan focal objet au sein de la section.

Par exemple, on pourra calculer, pour chaque détecteur élémentaire du dispositif d'acquisition bidimensionnel, une valeur de pixel en fonction d'une valeur d'un paramètre représentatif des variations temporelles d'intensité desdits signaux interférométriques bidimensionnels acquis par ledit détecteur élémentaire. Le paramètre est par exemple

**EP 4 348 167 B1**

représentatif de la dispersion temporelle des intensités des signaux interférométriques.

En effet, les fluctuations ou variation temporelle du signal d'intensité nous renseignent sur la fluctuation de position des diffuseurs. Par exemple, si les diffuseurs ont un mouvement Brownien (fluctuation aléatoire de la position), le signal d'intensité mesuré doit être purement aléatoire avec un $\Delta I$ qui doit augmenter statistiquement comme $\sqrt{t}$ (ou comme la racine carrée du décalage temporel entre images). En pratique, on s'intéresse plus souvent à des diffuseurs dans des cellules biologiques. La physiologie de la cellule fait que les mouvements ne sont plus aléatoires, mais biaisés, car la cellule contrôle le mouvement des diffuseurs (par exemple par des moteurs moléculaires). On a pu montrer qu'en mesurant la fluctuation du signal d'intensité créé par le mouvement des diffuseurs, on obtenait un signal spécifique et dépendant du métabolisme de la cellule.

En pratique, on enregistre N images dans le même plan en fonction du temps. Le signal est à priori aléatoire car la position des diffuseurs l'est aussi, comme illustré sur la FIG. 5.

A partir de cette trace temporelle, on peut faire des traitements statistiques qui renseignent sur l'environnement du diffuseur. La sensibilité aux mouvements des diffuseurs n'est valable que pour les diffuseurs dans la section optique, i.e. très proches du plan focal. Les fluctuations du signal ne sont donc causées majoritairement que par les diffuseurs provenant du volume focal.

Ainsi, on peut finalement faire de la tomographie dynamique, c'est-à-dire, enregistrer les fluctuations du signal dans un plan, faire l'analyse, bouger la position de l'objectif, et recommencer et ainsi de suite. On cartographie ainsi l'environnement des diffuseurs en 3D. Par exemple, chaque pixel de la caméra enregistre un signal qui est une série temporelle qu'il s'agit d'analyser et de représenter. Il existe plusieurs moyens d'effectuer cette analyse. Par exemple, on pourra calculer la transformée de Fourier de la série temporelle des signaux interférométriques pour en déduire une pluralité de valeurs du pixel, par exemple des valeurs correspondant respectivement à la puissance (intégrale sur le spectre du module au carré de la TF), à la fréquence centrale du spectre de fréquence (H) et à la largeur spectrale (S). On peut par exemple utiliser une représentation couleur HSV (pour *« Hue, Saturation, Value »* ou « *Teinte, Saturation, Valeur* ») pour représenter respectivement la fréquence centrale du spectre de fréquence (H), la largeur spectrale (S) et la puissance (V).

D'autres moyens d'analyse peuvent être utilisés comme le simple calcul de la déviation standard de la série temporelle des signaux interférométriques ou l'analyse des sommes cumulées (fonction cumsum) desdites séries temporelles pour des mouvements biaisés.

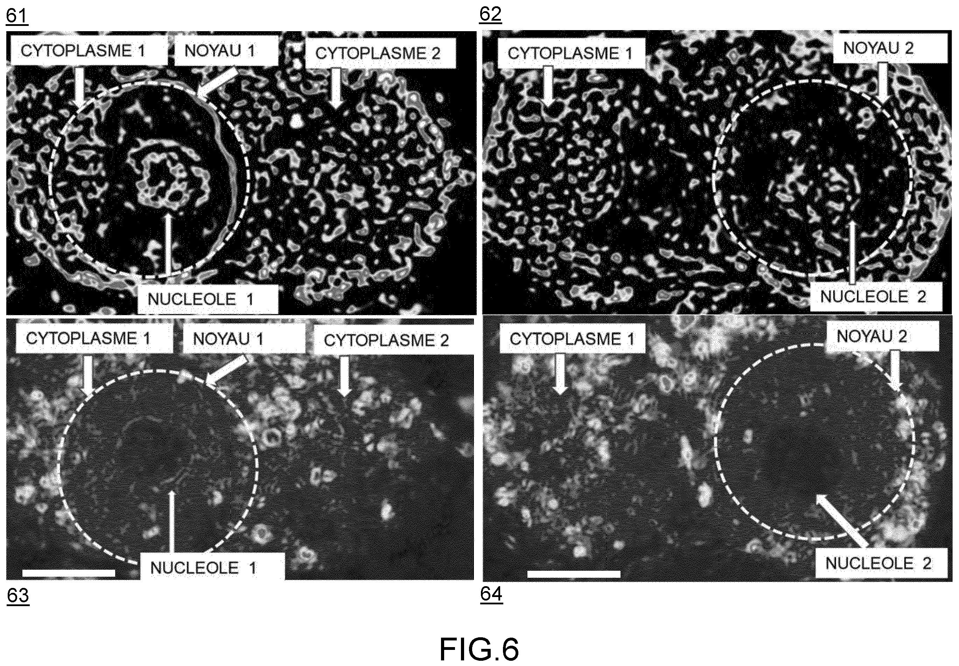

La FIG. 6 représente des images de deux sections de cellules cancéreuses HeLa distantes de 4 microns et obtenues au moyen d'un système d'imagerie selon la présente description, similaire à celui représenté sur la FIG. 1A. L'objectif de microscope est un objectif de grandissement 100X à immersion dans l'huile avec une ouverture numérique de 1,25 et la longueur d'onde centrale est égale à 450 nanomètres. La caméra utilisée est une caméra CMOS de marque Photon Focus ® MV-D1024E Series.

Pour réaliser cette image, le plan focal objet de l'objectif de microscope est déplacé pour être centré sur deux sections de la cellule, une première section au niveau du cytoplasme (61, 63) et une deuxième section au niveau du noyau de la cellule (62, 64). Ces images illustrent l'aptitude du procédé objet de la présente description à tomographier des cellules. Les images inférieures 63, 64 représentent la morphologie de la cellule, les images supérieures 61, 62 la partie "dynamique" La barre d'échelle est égale à 2 microns.

Bien que décrite à travers un certain nombre d'exemples de réalisation, les procédés et systèmes d'imagerie tomographique selon la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**Références**

Réf 1 : Lacey, A. « Phase contrast., Light Microscopy in Biology: A Practical Approach", Lacey, A. (ed), Oxford University Press, Oxford, England, pages 23-25 (1999).

Réf 2 : Pluta, M. "Nomarski's DIC microscopy: A review ». Proceedings of SPIE 1846: 10-25 (1994).

Réf 3 : Amos, W. B. and White, J. G. « How the confocal laser scanning microscope entered biological research". Biology of the Cell 95: 335-342 (2003).

Réf 4 : Harms, F, Latrive, A, and Boccara, A.C « Time Domain Full Field Optical Coherence Tomography Microscopy » page 791 In Optical Coherence Tomography Wolfgang Drexler - James G. Fujimoto - Editors - Springer 2012.

Réf 5 : Brevet français FR2817030

Réf 6 : Brevet français FR3034858

**Revendications**

1. Procédé d'imagerie tridimensionnelle par tomographie optique plein champ d'un objet biologique transparent dans un échantillon biologique (10), le procédé d'imagerie tridimensionnelle comprenant :

   - le positionnement de l'échantillon au voisinage d'un plan focal objet (125) d'un objectif de microscope (121), ledit objectif de microscope comprenant un axe optique ($\Delta$) donné ;
   - l'illumination de l'échantillon en transmission au moyen d'un faisceau d'illumination de lumière incohérente spatialement et de longueur d'onde centrale ($\lambda$) donnée;
   - le déplacement relatif dudit objectif de microscope par rapport audit échantillon, selon une direction axiale parallèle à l'axe optique de l'objectif de microscope, pour définir une pluralité de positions de l'échantillon, chaque position correspondant à une section (101) dudit objet biologique centrée sur le plan focal objet de l'objectif de microscope; et
   - pour chaque position de l'échantillon, la production d'au moins une première image d'un champ objet de ladite section comprenant :

      - l'acquisition, au moyen d'un dispositif d'acquisition bidimensionnel (140) comprenant une pluralité de détecteurs élémentaires agencés dans un plan de détection (141), d'une pluralité de signaux interférométriques bidimensionnels résultant d'interférences optiques entre le faisceau d'illumination incident sur le champ objet et un faisceau diffusé par ledit champ objet, dans lequel ledit plan de détection est conjugué optiquement avec le plan focal objet de l'objectif de microscope par un système optique d'imagerie comprenant ledit objectif de microscope;
      - le calcul, au moyen d'une unité de traitement (150), de ladite au moins une première image, à partir de ladite pluralité de signaux interférométriques bidimensionnels.

2. Procédé d'imagerie selon la revendication 1, dans lequel les signaux interférométriques bidimensionnels de ladite pluralité de signaux interférométriques bidimensionnels sont acquis pour différentes positions du plan focal objet dans l'épaisseur de ladite section, résultant en une pluralité de déphasages prédéterminés entre ledit faisceau d'illumination et ledit faisceau diffusé comprises entre - $\pi/2$ et $\pi/2$.

3. Procédé d'imagerie selon la revendication 2, dans lequel :

   - le calcul de ladite au moins une première image comprend une combinaison linéaire des signaux interférométriques bidimensionnels de ladite pluralité de signaux interférométriques bidimensionnels.

4. Procédé d'imagerie selon l'une quelconque des revendications 2 ou 3, dans lequel le déplacement relatif dudit objectif de microscope par rapport audit échantillon suit une fonction périodique d'amplitude maximale $\lambda/4$, où $\lambda$ est la longueur d'onde centrale du faisceau d'illumination.

5. Procédé d'imagerie selon l'une quelconque des revendications précédentes, dans lequel :

   - les signaux interférométriques bidimensionnels de ladite pluralité de signaux interférométriques bidimensionnels sont acquis pour une position fixe de l'objectif de microscope par rapport audit échantillon, et
   - le calcul de ladite au moins une première image du champ objet de ladite section comprend le calcul, pour chaque détecteur élémentaire du dispositif d'acquisition bidimensionnel, d'au moins une valeur de pixel en fonction d'une valeur d'un paramètre représentatif des variations temporelles d'intensité desdits signaux interférométriques bidimensionnels acquis par ledit détecteur élémentaire.

6. Procédé d'imagerie selon la revendication 5, dans lequel ledit paramètre est représentatif de la dispersion temporelle des intensités desdits signaux interférométriques.

7. Système d'imagerie tridimensionnelle (100) par tomographie optique plein champ d'un objet biologique transparent dans un échantillon biologique (10), le système d'imagerie comprenant :

   - une source lumineuse (110) configurée pour l'émission d'un faisceau d'illumination de lumière incohérente spatialement, de longueur centrale donnée, ledit faisceau d'illumination étant configuré pour illuminer l'échantillon en transmission;
   - un système d'imagerie optique (120) comprenant un objectif de microscope (121) avec un axe optique ($\Delta$) donné

et un plan focal objet (125) donné au voisinage duquel, en fonctionnement, l'échantillon (10) est positionné;
- des moyens de déplacement relatif (131, 132, 135) dudit objectif de microscope par rapport audit échantillon, selon une direction axiale parallèle à l'axe optique de l'objectif de microscope ;
- un dispositif d'acquisition bidimensionnelle (140) comprenant une pluralité de détecteurs élémentaires agencés dans un plan de détection (141), ledit plan de détection étant conjugué optiquement avec le plan focal objet de l'objectif de microscope par ledit système optique d'imagerie; et
- une unité de traitement (150);

et dans lequel, pour chaque section d'une pluralité de sections dudit objet biologique :

- ledit système d'imagerie tridimensionnelle est configuré pour l'acquisition, au moyen dudit dispositif d'acquisition bidimensionnelle (140), d'une pluralité de signaux interférométriques bidimensionnels résultant d'interférences optiques entre ledit faisceau d'illumination et un faisceau diffusé par un champ objet de ladite section;
- ladite unité de traitement (150) est configurée pour calculer à partir de ladite pluralité de signaux interférométriques bidimensionnels au moins une première image dudit champ objet de ladite section.

8. Système d'imagerie selon la revendication 7, dans lequel les signaux interférométriques bidimensionnels de ladite pluralité de signaux interférométriques bidimensionnels sont acquis pour différentes positions du plan focal objet dans l'épaisseur de ladite section, résultant en une pluralité de déphasages prédéterminés entre ledit faisceau d'illumination et ledit faisceau diffusé comprises entre - $\pi/2$ et $\pi/2$.

9. Système d'imagerie selon la revendication 8, dans lequel le calcul de ladite au moins une première image comprend une combinaison linéaire des signaux interférométriques bidimensionnels de ladite pluralité de signaux interférométriques bidimensionnels.

10. Système d'imagerie selon l'une quelconque des revendications 7 à 9, dans lequel les signaux interférométriques bidimensionnels ladite pluralité de signaux interférométriques bidimensionnels sont acquis pour une position fixe de l'objectif de microscope par rapport audit échantillon, et le calcul de ladite au moins une première image du champ objet de ladite section comprend :

- le calcul, pour chaque détecteur élémentaire du dispositif d'acquisition bidimensionnel, d'au moins une valeur de pixel en fonction d'une valeur d'un paramètre représentatif des variations temporelles d'intensité desdits signaux interférométriques bidimensionnels acquis par ledit détecteur élémentaire.

11. Système d'imagerie selon la revendication 10, dans lequel ledit paramètre est représentatif de la dispersion temporelle des intensités desdits signaux interférométriques bidimensionnels.

**Patentansprüche**

1. Verfahren zur dreidimensionalen Bildgebung durch optische Vollfeldtomographie eines transparenten biologischen Objekts in einer biologischen Probe (10), wobei das Verfahren zur dreidimensionalen Bildgebung umfasst:

- Positionieren der Probe in der Nähe einer Objektbrennebene (125) eines Mikroskopobjektivs (121), wobei das Mikroskopobjektiv eine gegebene optische Achse (Δ) umfasst;
- Beleuchten der Probe in Transmission mittels eines Beleuchtungsstrahls aus räumlich inkohärentem Licht und einer gegebenen zentralen Wellenlänge (λ);
- relatives Verschieben des Mikroskopobjektivs in Bezug auf die Probe gemäß einer axialen Richtung parallel zur optischen Achse des Mikroskopobjektivs, um eine Vielzahl von Positionen der Probe zu definieren, wobei jede Position einem Abschnitt (101) des biologischen Objekts entspricht, der auf die Objektbrennebene des Mikroskopobjektivs zentriert ist; und
- für jede Position der Probe, Erzeugen mindestens eines ersten Bildes eines Objektfeldes des Abschnitts, umfassend:

- Erfassen, mittels einer Vorrichtung zur zweidimensionalen Erfassung (140), die eine Vielzahl in einer Detektionsebene (141) angeordneter Elementardetektoren umfasst, einer Vielzahl zweidimensionaler interferometrischer Signale, die aus optischen Interferenzen zwischen dem auf das Objektfeld auftreffenden Beleuchtungsstrahl und einem von dem Objektfeld gestreuten Strahl resultieren, wobei die Detektionsebene durch ein optisches Bildgebungssystem, welches das Mikroskopobjektiv umfasst, optisch mit der Objektbrennebene des Mikroskopobjektivs konjugiert ist;
- Berechnen, mittels einer Verarbeitungseinheit (150), des mindestens einen ersten Bildes aus der Vielzahl zweidimensionaler interferometrischer Signale.

2. Bildgebungsverfahren nach Anspruch 1, wobei die zweidimensionalen interferometrischen Signale der Vielzahl von zweidimensionalen interferometrischen Signalen für unterschiedliche Positionen der Objektbrennebene in der Dicke des Abschnitts erfasst werden, was zu einer Vielzahl von vorbestimmten Phasenverschiebungen zwischen dem Beleuchtungsstrahl und dem gestreuten Strahl führt, die zwischen $-\pi/2$ und $\pi/2$ liegen.

3. Bildgebungsverfahren nach Anspruch 2, wobei:

- die Berechnung des mindestens einen ersten Bildes eine lineare Kombination der zweidimensionalen interferometrischen Signale der Vielzahl zweidimensionaler interferometrischer Signale umfasst.

4. Bildgebungsverfahren nach einem der Ansprüche 2 oder 3, wobei die relative Verschiebung des Mikroskopobjektivs in Bezug auf die Probe einer periodischen Funktion mit einer maximalen Amplitude von $\lambda/4$ folgt, wobei $\lambda$ die zentrale Wellenlänge des Beleuchtungsstrahls ist.

5. Bildgebungsverfahren nach einem der vorstehenden Ansprüche, wobei:

- die zweidimensionalen interferometrischen Signale der Vielzahl von zweidimensionalen interferometrischen Signalen für eine feste Position des Mikroskopobjektivs relativ zur Probe erfasst werden, und
- die Berechnung des mindestens einen ersten Bildes des Objektfeldes des Abschnitts die Berechnung mindestens eines Pixelwerts für jeden Elementardetektor der Vorrichtung zur zweidimensionalen Erfassung in Abhängigkeit eines Wertes eines Parameters umfasst, der die zeitlichen Intensitätsschwankungen der vom Elementardetektor erfassten zweidimensionalen interferometrischen Signale darstellt.

6. Bildgebungsverfahren nach Anspruch 5, wobei der Parameter die zeitliche Streuung der Intensitäten der interferometrischen Signale darstellt.

7. System zur dreidimensionalen Bildgebung (100) durch optische Vollfeldtomographie eines transparenten biologischen Objekts in einer biologischen Probe (10), wobei das Bildgebungssystem umfasst:

- eine Lichtquelle (110), die konfiguriert ist, um einen Beleuchtungsstrahl aus räumlich inkohärentem Licht mit einer gegebenen zentralen Länge zu emittieren, wobei der Beleuchtungsstrahl konfiguriert ist, um die Probe in Transmission zu beleuchten;
- ein optisches Bildgebungssystem (120), das ein Mikroskopobjektiv (121) mit einer gegebenen optischen Achse ($\Delta$) und einer gegebenen Objektbrennebene (125) umfasst, in deren Nähe im Betrieb die Probe (10) positioniert ist;
- Mittel zur relativen Verschiebung (131, 132, 135) des Mikroskopobjektivs relativ zur Probe gemäß einer axialen Richtung parallel zur optischen Achse des Mikroskopobjektivs;
- eine Vorrichtung zur zweidimensionalen Erfassung (140), die eine Vielzahl von Elementardetektoren umfasst, die in einer Detektionsebene (141) angeordnet sind, wobei die Detektionsebene durch das optische Bildgebungssystem optisch mit der Objektbrennebene des Mikroskopobjektivs konjugiert ist; und
- eine Verarbeitungseinheit (150);

und wobei für jeden Abschnitt einer Vielzahl von Abschnitten des biologischen Objekts:

- das System zur dreidimensionalen Bildgebung für die Erfassung einer Vielzahl zweidimensionaler interferometrischer Signale mittels der Vorrichtung zur zweidimensionalen Erfassung (140) konfiguriert ist, die aus optischen Interferenzen zwischen dem Beleuchtungsstrahl und einem von einem Objektfeld des Abschnitts gestreuten Strahl resultieren;
- die Verarbeitungseinheit (150) konfiguriert ist, um aus der Vielzahl zweidimensionaler interferometrischer Signale mindestens ein erstes Bild des Objektfeldes des Abschnitts zu berechnen.

8. Bildgebungssystem nach Anspruch 7, wobei die zweidimensionalen interferometrischen Signale der Vielzahl von zweidimensionalen interferometrischen Signalen für unterschiedliche Positionen der Objektbrennebene in der Dicke des Abschnitts erfasst werden, was zu einer Vielzahl von vorbestimmten Phasenverschiebungen zwischen dem Beleuchtungsstrahl und dem gestreuten Strahl führt, die zwischen $-\pi/2$ und $\pi/2$ liegen.

9. Bildgebungssystem nach Anspruch 8, wobei die Berechnung des mindestens einen ersten Bildes eine lineare Kombination der zweidimensionalen interferometrischen Signale der Vielzahl von zweidimensionalen interferometrischen Signalen umfasst.

10. Bildgebungssystem nach einem der Ansprüche 7 bis 9, wobei die zweidimensionalen interferometrischen Signale der Vielzahl von zweidimensionalen interferometrischen Signalen für eine feste Position des Mikroskopobjektivs relativ zur Probe erfasst werden, und die Berechnung des mindestens einen ersten Bildes des Objektfeldes des Abschnitts umfasst:

- die Berechnung mindestens eines Pixelwerts für jeden Elementardetektor der Vorrichtung zur zweidimensionalen Erfassung in Abhängigkeit eines Wertes eines Parameters, der die zeitlichen Intensitätsschwankungen der vom Elementardetektor erfassten zweidimensionalen interferometrischen Signale darstellt.

11. Bildgebungssystem nach Anspruch 10, wobei der Parameter die zeitliche Streuung der Intensitäten der zweidimensionalen interferometrischen Signale darstellt.

## Claims

1. A method for three-dimensional imaging of a transparent biological object in a biological sample (10) by full-field optical tomography, the three-dimensional imaging method comprising:

- positioning the sample in the vicinity of an object focal plane (125) of a microscope lens (121), said microscope lens comprising a given optical axis ($\Delta$);
- illuminating the sample in transmission by means of an illumination beam of spatially incoherent light with a given central wavelength ($\lambda$);
- relatively displacing said microscope lens relative to said sample, along an axial direction parallel to the optical axis of the microscope lens, to define a plurality of positions of the sample, each position corresponding to a section (101) of said biological object centred on the object focal plane of the microscope lens; and
- for each position of the sample, producing at least one first image of an object field of said section comprising:

- acquiring, by means of a two-dimensional acquisition device (140) comprising a plurality of elementary detectors arranged in a detection plane (141), a plurality of two-dimensional interferometric signals resulting from optical interference between the illumination beam incident on the object field and a beam scattered by said object field, wherein said detection plane is optically conjugated with the object focal plane of the microscope lens by an imaging optical system comprising said microscope lens;
- calculating, by means of a processing unit (150), said at least one first image, from said plurality of two-dimensional interferometric signals.

2. The imaging method according to claim 1, wherein the two-dimensional interferometric signals of said plurality of two-dimensional interferometric signals are acquired for different positions of the object focal plane in the thickness of said section, resulting in a plurality of predetermined phase shifts between said illumination beam and said scattered beam ranging between $-\pi/2$ and $\pi/2$.

3. The imaging method according to claim 2, wherein:

- the calculation of said at least one first image comprises a linear combination of said plurality of two-dimensional interferometric signals.

4. The imaging method according to any of claims 2 or 3, wherein the relative displacement of said microscope lens relative to said sample follows a periodic function of maximum amplitude $\lambda/4$, where $\lambda$ is the central wavelength of the illumination beam.

5. The imaging method according to any one of the preceding claims, wherein:

- the two-dimensional interferometric signals of said plurality of two-dimensional interferometric signals are acquired for a fixed position of the microscope lens relative to said sample, and
- calculating said at least one first image of the object field of said section comprises calculating, for each elementary detector of the two-dimensional acquisition device, at least one pixel value as a function of a value of a parameter representative of the temporal variations in intensity of said two-dimensional interferometric signals acquired by said elementary detector.

6. The imaging method according to claim 5, wherein said parameter is representative of the temporal dispersion of the intensities of said interferometric signals.

7. A three-dimensional imaging system (100) for imaging a transparent biological object in a biological sample (10) by full-field optical tomography, the imaging system comprising:

- a light source (110) configured for the emission of an illumination beam of spatially incoherent light, of given central length, said illumination beam being configured to illuminate the sample in transmission;
- an optical imaging system (120) comprising a microscope lens (121) with a given optical axis ($\Delta$) and a given object focal plane (125) in the vicinity of which, in operation, the sample (10) is positioned;
- means for relatively displacing (131, 132, 135) said microscope lens relative to said sample, along an axial direction parallel to the optical axis of the microscope lens;
- a two-dimensional acquisition device (140) comprising a plurality of elementary detectors arranged in a detection plane (141), said detection plane being optically conjugated with the object focal plane of the microscope lens by said optical imaging system; and
- a processing unit (150);

and wherein, for each section of a plurality of sections of said biological object:

- said three-dimensional imaging system is configured for the acquisition, by means of said two-dimensional acquisition device (140), of a plurality of two-dimensional interferometric signals resulting from optical interference between said illumination beam and a beam scattered by an object field of said section;
- said processing unit (150) is configured to calculate from said plurality of two-dimensional interferometric signals at least one first image of said object field of said section.

8. The imaging system according to claim 7, wherein the two-dimensional interferometric signals of said plurality of two-dimensional interferometric signals are acquired for different positions of the object focal plane in the thickness of said section, resulting in a plurality of predetermined phase shifts between said illumination beam and said scattered beam ranging between - $\pi/2$ and $\pi/2$.

9. The imaging system according to claim 8, wherein the calculation of said at least one first image comprises a linear combination of the two-dimensional interferometric signals of said plurality of two-dimensional interferometric signals.

10. The imaging system according to any one of claims 7 to 9, wherein the two-dimensional interferometric signals of said plurality of two-dimensional interferometric signals are acquired for a fixed position of the microscope lens relative to said sample, and calculating said at least one first image of the object field of said section comprises:

- calculating, for each elementary detector of the two-dimensional acquisition device, at least one pixel value as a function of a value of a parameter representative of the temporal variations in intensity of said two-dimensional interferometric signals acquired by said elementary detector.

11. The imaging system according to claim 10, wherein said parameter is representative of the temporal dispersion of the intensities of said two-dimensional interferometric signals.

(Δ)

140

141

142

145

100

122

120

121

132

10

110

131

135

150

# FIG.1A

(Δ)

y

x

z

132

Fluor    40
0X/0.80WI

101

125

10

110

131

# FIG.1B

FIG.2A

FIG.2B

FIG.3A

FIG.3B

Différence entre les intensités de deux signaux interférométriques acquis dans la profondeur de champ (u.a.)

Position par rapport au plan focal objet (μm)

FIG.3C

FIG.3D

FIG.4

FIG.5

FIG.6

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2817030

- FR 3034858

**Littérature non-brevet citée dans la description**

- **HARMS, F.** *Time Domain Full Field Optical Coherence Tomography Microscopy Time Domain*
- **WOLFGANG DREXLER**. *Optical Coherence Tomography*
- **BOCCAR et al.** Full-field interferometry for counting and differentiating aquatic biotic nanoparticles: from laboratory to Tara Oceans. *Biomed Opt Express*, 29 August 2016, vol. 7 (9), 3736-3746
- **LACEY, A.** Phase contrast., Light Microscopy in Biology: A Practical Approach. Oxford University Press, 1999, 23-25

- **PLUTA, M.** Nomarski's DIC microscopy: A review. *Proceedings of SPIE*, 1994, vol. 1846, 10-25
- **AMOS, W. B.** ; **WHITE, J. G.** How the confocal laser scanning microscope entered biological research. *Biology of the Cell*, 2003, vol. 95, 335-342
- Time Domain Full Field Optical Coherence Tomography Microscopy. **HARMS, F** ; **LATRIVE, A** ; **BOCCARA, A.C**. In Optical Coherence Tomography Wolfgang Drexler. Springer, 2012, 791